# EUROPEAN PATENT APPLICATION

(11) **EP 4 718 691 A1**
(43) Date of publication of application: **01.04.2026**
(21) Application number: 24856239.9
(22) Date of filing: 31.07.2024
(51) Int. Cl.: H02K 15/02

(54) **METHOD AND DEVICE FOR ADJUSTING THICKNESS OF LAMINATED CORE**

(30) Priority: 21.08.2023 JP 2023134178
(71) Applicant: Yoshikawa Kogyo Co., Ltd., Kitakyushu-shi, Fukuoka 805-8501 (JP)
(72) Inventor: OKAMURA, Yuza, Kitakyushu-shi, Fukuoka 805-8501 (JP); HATTORI, Yasunori, Kitakyushu-shi, Fukuoka 805-8501 (JP); FURUNO, Fumiyasu, Kitakyushu-shi, Fukuoka 805-8501 (JP)
(74) Representative: Goddar, Heinz J.
(86) International application number: PCT/JP2024/027273
(87) International publication number: WO 2025/041546

(57) **Abstract**

The present invention provides a technology capable of easily adjusting the thickness of a laminated core without modifying a device for manufacturing a laminated core itself. The present invention brings a laminated core A and a substrate member 1 including a peeling blade 11 having a protruding height equivalent to one or a plurality of core sheet materials A1 constituting the laminated core A into contact with each other and causes the laminated core A and the substrate member 1 to relatively slide to peel off one or a plurality of core sheet materials A1 from the laminated core A.

## Description

### Technical Field

The present invention relates to a method and a device for adjusting a thickness of a laminated core for adjusting the thickness of a laminated core in which a plurality of core sheet materials are laminated on each other.

### Background Art

A core of an electric motor includes a laminated core in which a plurality of core sheet materials (generally electromagnetic steel sheets) are laminated on each other. The thickness of such a laminated core is generally controlled based on the number of laminated core sheet materials. However, due to variations or the like in the thickness of the core sheet materials to be laminated, variations in the thickness of the laminated core also occur, and consequently, the thickness of the laminated core may deviate from an acceptable range. Given this, to make the thickness of the laminated core fall within the acceptable range, measures have been conventionally generally taken in which variations or the like in the sheet thickness of the core sheet materials are grasped in advance, and manufacturing conditions such as lamination conditions are changed in accordance with the actual sheet thickness of the core sheet materials (for example, Patent Literature 1).

However, such conventional measures make the manufacturing conditions complicated, which also inevitably makes a manufacturing device complicated. Thus, a general device for manufacturing a laminated core is not adaptable, and there is need to modify the manufacturing device itself.

### Citation List

### Patent Literature

Patent Literature 1: Japanese Patent No. 5418186

### Summary

### Technical Problem

An object of the present invention is to provide a technology capable of easily adjusting the thickness of a laminated core without modifying a device for manufacturing a laminated core itself.

### Solution to Problem

One aspect of the present invention provides the following method for adjusting a thickness of a laminated core.

A method for adjusting a thickness of a laminated core, the method adjusting a thickness of a laminated core in which a plurality of core sheet materials are laminated on each other, the method including
bringing a laminated core and a substrate member including a peeling blade having a protruding height equivalent to one or a plurality of core sheet materials constituting the laminated core into contact with each other and causing the laminated core and the substrate member to relatively slide to peel off one or a plurality of core sheet materials from the laminated core.

Another aspect of the present invention provides the following device for adjusting a thickness of a laminated core.

A device for adjusting a thickness of a laminated core, the device adjusting a thickness of a laminated core in which a plurality of core sheet materials are laminated on each other, the device including:
a substrate member including a peeling blade having a protruding height equivalent to one or a plurality of core sheet materials constituting the laminated core;
a holding mechanism that holds the laminated core so as to be in contact with the substrate member; and
a sliding mechanism that causes the substrate member and the holding mechanism to relatively slide.

### Advantageous Effects of Invention

The present invention can easily adjust the thickness of the laminated core without modifying a device for manufacturing a laminated core itself.

### Brief Description of Drawings

FIG. 1 is an illustrative diagram conceptually illustrating one embodiment of a method for adjusting a thickness of a laminated core according to the present invention.
FIG. 2 is a schematic perspective view illustrating the entire configuration of a device for adjusting a thickness of a laminated core as one embodiment of the present invention.

### Description of Embodiments

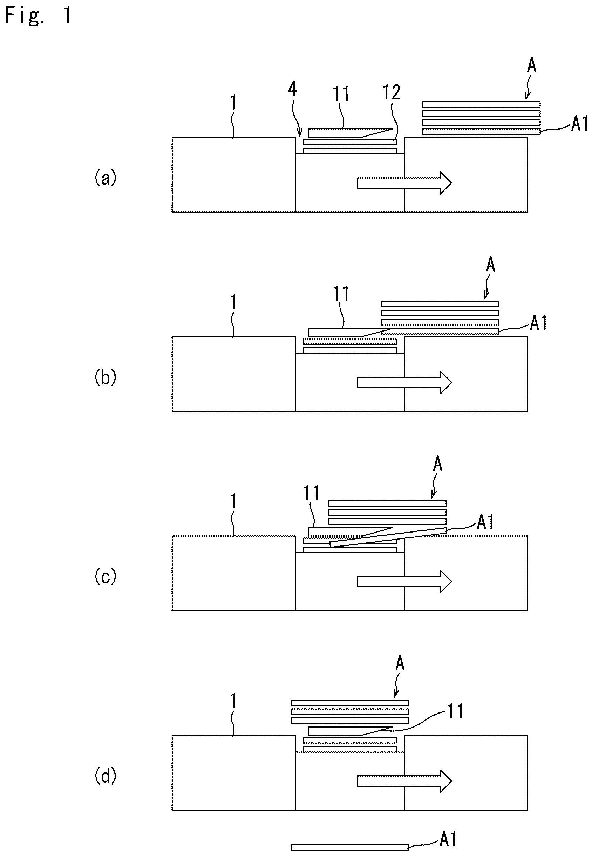

FIG. 1 conceptually illustrates one embodiment of a method for adjusting a thickness of a laminated core according to the present invention. The present invention adjusts the thickness of a laminated core in which a plurality of core sheet materials are laminated on each other. Specifically, in the embodiment in FIG. 1, a laminated core A and a substrate member 1 including a peeling blade 11 having a protruding height equivalent to one core sheet material A1 constituting the laminated core A are brought into contact with each other and are caused to relatively slide to peel off one core sheet material A1 from the laminated core A. More specifically, first, the lower surface of the laminated core A and the upper surface of the substrate member 1 are brought into contact with each other (FIG. 1(a)). Next, the substrate member 1 is caused to slide in one direction (the right direction in FIG. 1) (FIGS. 1(b) and 1(c)). This peels off one core sheet material A1 from the laminated core A (FIG. 1(d)). As a result, the thickness of the laminated core A decreases by one core sheet material A1. The operations in FIGS. 1(a) to 1(d) are then repeated as needed to decrease the thickness of the laminated core A by one core sheet material A1 so that its thickness falls within an acceptable range.

For example, in the following case, the operations in FIGS. 1(a) to 1(d) can be repeated three times to peel off three core sheet materials A1 to obtain a final thickness of 57.61 mm.
· Thickness acceptable range of laminated core A: 57.60 ± 0.05 mm
· Initial thickness of laminated core A: 57.91 mm
· Thickness of core sheet material A1: 0.10 mm

Note that in the embodiment in FIG. 1, the substrate member 1 is caused to slide in one direction (the right direction in FIG. 1), but the laminated core A may be caused to slide in the other direction (the left direction in FIG. 1). In short, the present invention may bring the laminated core A and the substrate member 1 into contact with each other and cause the laminated core A and the substrate member 1 to relatively slide.

In the embodiment in FIG. 1, the peeling blade 11 is caused to protrude from the upper surface of the substrate member 1 to bring the lower surface of the laminated core A and the upper surface of the substrate member 1 into contact with each other, but the peeling blade 11 may be caused to protrude from the lower surface of the substrate member 1 to bring the upper surface of the laminated core A and the lower surface of the substrate member 1 into contact with each other.

In the embodiment in FIG. 1, the peeling blade 11 is a single-edged blade to peel off the core sheet material A1 when the substrate member 1 is caused to slide in one direction (the right direction in FIG. 1), but the peeling blade 11 may be a double-edged blade to peel off the core sheet material A1 also when the substrate member 1 is caused to slide in the other direction (the left direction in FIG. 1).

Furthermore, in the embodiment in FIG. 1, the protruding height of the peeling blade 11 is equivalent to one core sheet material A1 to peel off one core sheet material A1 each, but the protruding height of the peeling blade 11 may be equivalent to a plurality of core sheet materials A1 to peel off the core sheet materials A1 each. Note that the protruding height of the peeling blade 11 can be changed and adjusted by, for example, changing the number and/or the sheet thickness of shim sheets 12 inserted under the peeling blade 11 as illustrated in FIG. 1.

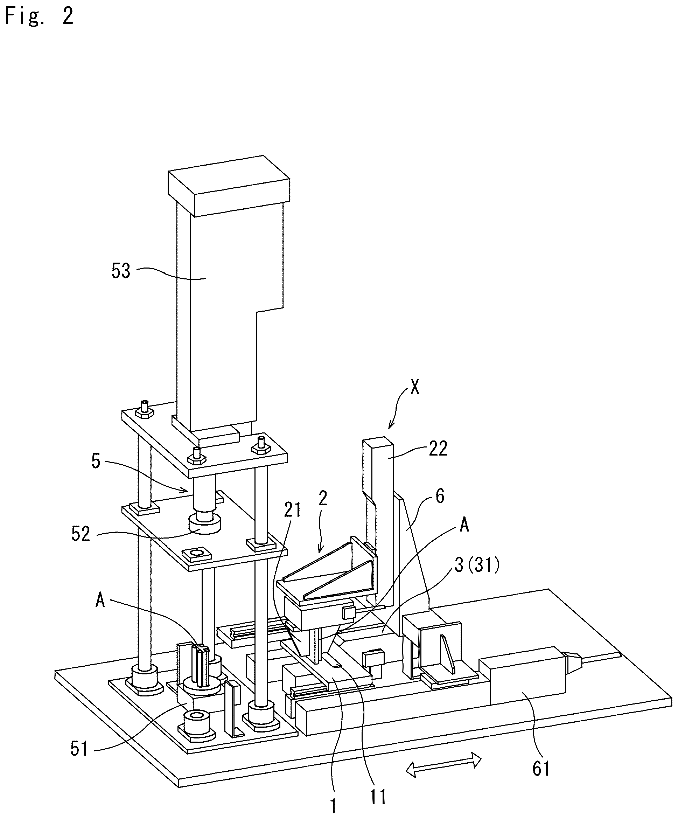

Next, a device for adjusting a thickness of a laminated core according to the present invention will be described. FIG. 2 schematically illustrates the entire configuration of a device for adjusting a thickness of a laminated core as one embodiment of the present invention with a perspective view.

This device X for adjusting a thickness of a laminated core illustrated in FIG. 2 (hereinafter simply referred to as the "thickness adjustment device") includes the substrate member 1, a holding mechanism 2 that holds the laminated core A so as to be in contact with the substrate member 1, and a sliding mechanism 3 that causes the substrate member 1 and the holding mechanism 2 to relatively slide.

In the present embodiment, the substrate member 1 includes the peeling blade 11 having a protruding height equivalent to one core sheet material A1 constituting the laminated core A as illustrated in FIG. 1. In the present embodiment, the protruding height of the peeling blade 11 can be changed and adjusted by changing the number and/or the sheet thickness of the shim sheets 12 inserted under the peeling blade 11 as described above. In other words, the thickness adjustment device X further includes a blade height adjustment mechanism 4 for adjusting the protruding height of the peeling blade 11, and the shim sheets 12 constitute a key part of the blade height adjustment mechanism 4.

Note that the blade height adjustment mechanism 4 illustrated in FIG. 1 manually adjusts the protruding height of the peeling blade 11, but the protruding height of the peeling blade 11 can be adjusted automatically by using a well-known actuator or the like. In other words, a controller (not illustrated) that controls the operation of the entire device is provided, and this controller can control the blade height adjustment mechanism 4 in accordance with the sheet thickness of the core sheet materials A1 input in advance to automatically adjust the protrusion height of the peeling blade 11.

Referring again to FIG. 2, in the present embodiment, the holding mechanism 2 includes an air chuck 21 as holding means to hold the laminated core A, and an electric cylinder 22 as raising and lowering means to raise and lower the air chuck 21. In other words, in the present embodiment, the holding mechanism 2 lowers the air chuck 21 with the electric cylinder 22 while holding the laminated core A with the air chuck 21 to bring the lower surface of the laminated core A into contact with the upper surface of the substrate member 1 as illustrated in FIG. 1. Note that the positional relation between the laminated core A and the substrate member 1 illustrated in FIG. 2 corresponds to the positional relation in FIG. 1(d).

In the present embodiment, the sliding mechanism 3 includes an electric actuator 31 as sliding means to cause the substrate member 1 to slide. In other words, in the present embodiment, the sliding mechanism 3 causes the substrate member 1 to slide with the electric actuator 31 to cause the substrate member 1 and the holding mechanism 2 to relatively slide, repeatedly executing the operations in FIGS. 1(a) to 1(d).

As represented in FIG. 2, the thickness adjustment device X further includes a thickness measurement mechanism 5 that measures the thickness of the laminated core. The thickness measurement mechanism 5 includes a mounting stand 51 on which the laminated core A is mounted, a contact 52 disposed above the mounting stand 51, and a servo cylinder 53 that raises and lowers the contact 52. In other words, in the present embodiment, the thickness measurement mechanism 5 lowers the contact 52 from an initial height position in FIG. 2 until it comes into contact with the upper surface of the laminated core A mounted on the mounting stand 51 to measure the thickness of the laminated core A based on a height position at that contact.

In the present embodiment, the controller described above can calculate the number of core sheet materials A1 to be peeled off from the laminated core A in accordance with the difference between the thickness of the laminated core A obtained by the thickness measurement mechanism 5 and a target value of the thickness of the laminated core A input in advance, and the sheet thickness of the core sheet materials A1 of the laminated core input in advance.

For example, in the following case, the controller calculates the number of core sheet materials A1 to be peeled off from the laminated core A to be three. The controller then repeats the operations in FIGS. 1(a) to 1(d) three times to peel off three core sheet materials A1. As a result, the final thickness of the laminated core A is 57.61 mm, which falls within the acceptable range.
· Thickness of laminated core A (measured value): 57.91 mm
· Target value of thickness of laminated core A (acceptable range): 57.60 ± 0.05 mm
· Thickness of core sheet material A1: 0.10 mm

In the present embodiment, the holding mechanism 2 is mounted on a support member 6. The support member 6 can move in a direction of the arrow in FIG. 2 by the operation of an air cylinder 61. In other words, in the present embodiment, the holding mechanism 2 can move between a position on the substrate member 1 and a position on the mounting stand 51 of the thickness measurement mechanism 5, which can move the laminated core A on the mounting stand 51 of the thickness measurement mechanism 5 to the position on the substrate member 1. In order to check the final thickness of the laminated core A, the laminated core A can be moved from the position on the substrate member 1 to the position on the mounting stand 51 of the thickness measurement mechanism 5 to measure the final thickness of the laminated core A with the thickness measurement mechanism 5.

### Reference Signs List

- A: Laminated core
- A1: Core sheet material
- X: Device for adjusting thickness of laminated core
- 1: Substrate member
- 11: Peeling blade
- 12: Shim sheet
- 2: Holding mechanism
- 21: Air chuck
- 22: Electric cylinder
- 3: Sliding mechanism
- 31: Electric actuator
- 4: Blade height adjustment mechanism
- 5: Thickness measurement mechanism
- 51: Mounting stand
- 52: Contact
- 53: Servo cylinder
- 6: Support member
- 61: Air cylinder

## Claims

1. A method for adjusting a thickness of a laminated core, the method adjusting a thickness of a laminated core in which a plurality of core sheet materials are laminated on each other, the method comprising
bringing a laminated core and a substrate member including a peeling blade having a protruding height equivalent to one or a plurality of core sheet materials constituting the laminated core into contact with each other and causing the laminated core and the substrate member to relatively slide to peel off one or a plurality of core sheet materials from the laminated core.

2. A device for adjusting a thickness of a laminated core, the device adjusting a thickness of a laminated core in which a plurality of core sheet materials are laminated on each other, the device comprising:
a substrate member including a peeling blade having a protruding height equivalent to one or a plurality of core sheet materials constituting the laminated core;
a holding mechanism that holds the laminated core so as to be in contact with the substrate member; and
a sliding mechanism that causes the substrate member and the holding mechanism to relatively slide.

3. The device for adjusting a thickness of a laminated core according to claim 2, further comprising a blade height adjustment mechanism that adjusts a protruding height of the peeling blade.

4. The device for adjusting a thickness of a laminated core according to claim 3, further comprising a controller that controls operation of the entire device, wherein
the controller controls the blade height adjustment mechanism in accordance with a sheet thickness of the core sheet materials input in advance to adjust the protruding height of the peeling blade.

5. The device for adjusting a thickness of a laminated core according to any one of claims 2 to 4, further comprising:
a controller that controls operation of the entire device; and
a thickness measurement mechanism that measures the thickness of the laminated core, wherein
the controller calculates number of core sheet materials to be peeled off from the laminated core in accordance with a difference between the thickness of the laminated core obtained by the thickness measurement mechanism and a target value of the thickness of the laminated core input in advance, and a sheet thickness of the core sheet materials of the laminated core input in advance.
